# EUROPEAN PATENT APPLICATION

(11) **EP 3 979 175 A1**
(43) Date of publication of application: **06.04.2022**
(21) Application number: 20818317.8
(22) Date of filing: 01.04.2020
(51) Int. Cl.: G06Q 30/06, G06Q 50/10

(54) **IN-VEHICLE SALES SYSTEM, MANAGEMENT SERVER, IN-VEHICLE SALES METHOD, AND IN-VEHICLE SALES PROGRAM**

(30) Priority: 03.06.2019 JP 2019103899
(71) Applicant: JR East Marketing & Communications, Inc., Tokyo, 150-8508 (JP)
(72) Inventor: IGARASHI Minoru, Tokyo 150-8508 (JP)
(74) Representative: Grünecker Patent- und Rechtsanwälte PartG mbB
(86) International application number: PCT/JP2020/015054
(87) International publication number: WO 2020/246122

(57) **Abstract**

An in-vehicle sales system for supporting sales of articles in a vehicle having a plurality of seats includes a position information providing medium that is arranged in association with each seat and provides installation position information on the seat; a user terminal configured to be capable of acquiring the installation position information from the position information providing medium and configured to be capable of transmitting the acquired installation position information and information on a commodity desired to be purchased; a management server configured to be capable of specifying the associated seat on the basis of the installation position information acquired from the user terminal and configured to be capable of transmitting information on the specified seat and the information on the commodity desired to be purchased that is acquired from the user terminal; and an attendant terminal configured to be capable of notifying of the information on the seat and the information on the commodity desired to be purchased that are acquired from the management server.

## Description

### Technical Field

The present invention relates to an in-vehicle sales system, a management server, an in-vehicle sales method, and an in-vehicle sales program used for an in-vehicle sales service.

### Background Art

Conventionally, in in-vehicle sales in bullet trains and the like, it is common that an attendant manually pushes a wagon on which commodities are placed and conducts sales while moving on a passage. In such in-vehicle sales, the attendant receives orders directly from passengers and conducts sales (Patent Literature 1).

### Citation List

### Patent Literature

Patent Literature 1: JP 2004-64493 A

### Summary of Invention

### Technical Problem

However, in the conventional in-vehicle sales, there is a problem that since the attendant conducts sales in order of seats, there are cases in which the attendant does not immediately come to a passenger who wishes to order and it takes time to place an order for a commodity.

The present invention has been made in view of the problem described above, and an object thereof is to provide an in-vehicle sales system, a management server, an in-vehicle sales method, and an in-vehicle sales program capable of improving the efficiency of in-vehicle sales.

### Solution to Problem

An in-vehicle sales system according to the present invention is an in-vehicle sales system for supporting sales of articles in a vehicle having a plurality of seats and includes: a position information providing medium that is arranged in association with each seat and provides installation position information on the seat; a user terminal configured to be capable of acquiring the installation position information from the position information providing medium and configured to be capable of transmitting the acquired installation position information and information on a commodity desired to be purchased; a management server configured to be capable of specifying the associated seat on the basis of the installation position information acquired from the user terminal and to be capable of transmitting information on the specified seat and the information on the commodity desired to be purchased that is acquired from the user terminal; and an attendant terminal configured to be capable of notifying of the information on the seat and the information on the commodity desired to be purchased that are acquired from the management server.

In the in-vehicle sales system according to the present invention, the management server may be configured to specify the seat on the basis of the installation position information acquired from the user terminal and a running direction of the vehicle.

In the in-vehicle sales system according to the present invention, the management server may include an inbound data table in which the installation position information when the vehicle runs in an inbound direction is associated with the seat and an outbound data table in which the installation position information when the vehicle runs in an outbound direction is associated with the seat, and the management server may be configured to specify the seat with reference to the inbound data table when the vehicle runs in the inbound direction and to specify the seat with reference to the outbound data table when the vehicle runs in the outbound direction.

In the in-vehicle sales system according to the present invention, the management server may be configured to be capable of executing seat reversal processing on the basis of the running direction of the vehicle.

The management server according to the present invention is a management server for supporting sales of articles in a vehicle having a plurality of seats and includes a seat position specifying unit that specifies a seat on which an operator of a user terminal sits on the basis of position information acquired from the user terminal; and a communication unit that transmits, to an attendant terminal, information on the specified seat and information on a commodity desired to be purchased that is acquired from the user terminal.

In the management server according to the present invention, the seat position specifying unit may be configured to specify the seat on the basis of position information acquired from the user terminal and a running direction of the vehicle.

An in-vehicle sales method according to the present invention is an in-vehicle sales method for supporting sales of articles in a vehicle having a plurality of seats and includes: an installation position information acquiring step of acquiring, in a user terminal, installation position information of a position information providing medium arranged in association with each seat from the position information providing medium; a seat position specifying step of specifying a seat on which an operator of the user terminal sits on the basis of the installation position information acquired in the user terminal; and a notification step of notifying an attendant of information on the specified seat and information on a commodity desired to be purchased that is acquired from the user terminal via an attendant terminal.

In the in-vehicle sales method according to the present invention, the seat position specifying step may specify the seat on the basis of the installation position information acquired from the user terminal and a running direction of the vehicle.

An in-vehicle sales program according to the present invention is an in-vehicle sales program for supporting sales of articles in a vehicle having a plurality of seats and causes a management server to execute: seat position specifying processing of specifying a seat on which an operator of a user terminal sits on the basis of position information acquired from the user terminal; and communication processing of transmitting, to an attendant terminal, information on the specified seat and information on a commodity desired to be purchased acquired from the user terminal.

In the in-vehicle sales program according to the present invention, the seat position specifying processing may be processing of specifying the seat on the basis of the position information acquired from the user terminal and a running direction of the vehicle.

### Advantageous Effects of Invention

According to the present invention, it is possible to provide an in-vehicle sales system, a management server, an in-vehicle sales method, and an in-vehicle sales program capable of improving the efficiency of in-vehicle sales.

### Brief Description of Drawings

Fig. 1 is a diagram illustrating an outline of an in-vehicle sales system according to a first embodiment.
Fig. 2 is a block diagram illustrating a schematic configuration of a management server according to the first embodiment.
Fig. 3 is a block diagram illustrating a schematic configuration of an attendant terminal according to the first embodiment.
Fig. 4 is a block diagram illustrating a schematic configuration of a user terminal according to the first embodiment.
Fig. 5(a) is a diagram illustrating seat positions and positions of position information providing media in a case where a train runs in an inbound direction, and Fig. 5(b) is a diagram illustrating an example of an inbound data table.
Fig. 6(a) is a diagram illustrating seat positions and positions of position information providing media in a case where a train runs in an outbound direction, and Fig. 6(b) is a diagram illustrating an example of an outbound data table.
Fig. 7 is a diagram illustrating an example of a login screen displayed on the attendant terminal.
Fig. 8 is a diagram illustrating an example of an inventory information input screen displayed on the attendant terminal.
Fig. 9 is a diagram illustrating an example of a purchase procedure screen displayed on the user terminal.
Fig. 10 is a diagram illustrating an example of an order display screen displayed on the attendant terminal.
Fig. 11 is a flowchart illustrating a preliminary preparation step in an in-vehicle sales method according to the first embodiment.
Fig. 12 is a flowchart illustrating a purchase procedure and settlement step in the in-vehicle sales method according to the first embodiment.
Fig. 13 is a diagram for describing shift processing in an in-vehicle sales system according to a second embodiment.

### Description of Embodiments

Hereinafter, preferred embodiments for carrying out the present invention will be described with reference to the drawings. Note that the following embodiments do not limit the invention according to each claim, and all combinations of features described in the embodiments are not necessarily essential to the solution of the invention.

### [In-vehicle Sales System]

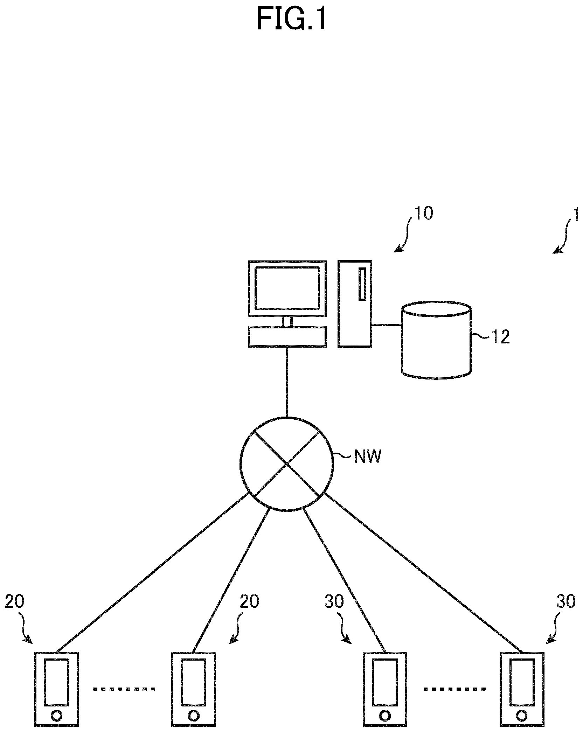

As illustrated in Fig. 1, an in-vehicle sales system 1 according to a first embodiment is a system for supporting in-vehicle sales and includes a management server 10 that manages sales information and the like in a plurality of vehicles, an attendant terminal 20 possessed by a sales staff in a vehicle who performs in-vehicle sales or the like (hereinafter, referred to as "attendant") and a user terminal 30 possessed by a user of the vehicle. Additionally, the in-vehicle sales system 1 according to the first embodiment includes a position information providing medium arranged in association with each seat in the vehicle.

Here, the term in-vehicle sales refers to a service of selling commodities (articles) in a vehicle having a plurality of seats. Note that in the following description, an aspect in which articles are sold in a vehicle of a bullet train will be described as an example, but the present invention is not limited thereto and the in-vehicle sales system 1 according to the first embodiment can also be adopted for in-vehicle sales, provision of articles, or the like in buses, airplanes, or the like.

The in-vehicle sales system 1 according to the first embodiment is schematically configured so that when the attendant rides on the train, the attendant can register information on the train on which the attendant is on duty (information on the train with the attendant on duty) and inventory information on commodities to be sold in the vehicle from the attendant terminal 20 to the management server 10.

Additionally, the in-vehicle sales system 1 according to the first embodiment is configured so that when the user uses the in-vehicle sales, the user can use the user terminal 30 to read a position information providing medium associated with a seat of the user and transmit a train ID (identification) and a seat ID, which are read from the position information providing medium, from the user terminal 30 to the management server 10, thereby being able to specify a train on which the user of the user terminal 30 is riding and a seat position.

Furthermore, the in-vehicle sales system 1 according to the first embodiment is configured so that the seat position of the user and information on a commodity that the user desires to purchase (information on a commodity desired to be purchased) are transmitted from the management server 10 to the attendant terminal 20 in the train on which the user of the user terminal 30 is riding, and the attendant can confirm the seat position of the user and the information on the commodity desired to be purchased.

Additionally, the in-vehicle sales system 1 according to the first embodiment is configured so that settlement information is transmitted from the attendant terminal 20 to the management server 10 after completion of settlement, and the inventory information is updated in the management server 10.

Hereinafter, a specific configuration of such an in-vehicle sales system 1 according to the first embodiment will be described.

### [Position Information Providing Medium]

The vehicle (bullet train) according to the first embodiment includes a plurality of cars, and a plurality of seats are arranged in each car. Each position information providing medium includes, for example, a matrix-type two-dimensional code or the like and is arranged at a position at which a user who sits on each seat can recognize that the position information providing medium is for him/her, for example, at a back face part (backrest) of a seat in the front column, an inner wall surface of the bullet train, or the like. Note that a position at which each position information providing medium is arranged is not limited to the back face part and the inner wall surface. For example, there may be adopted an aspect such as one in which a printed matter (leaflet or the like) on which each position information providing medium is printed is placed in a net rack or the like provided on a back face part of a seat in the front column. Additionally, the position information providing medium is not limited to the matrix-type two-dimensional code, and various media such as an integrated circuit (IC) chip capable of short-range communication can be adopted.

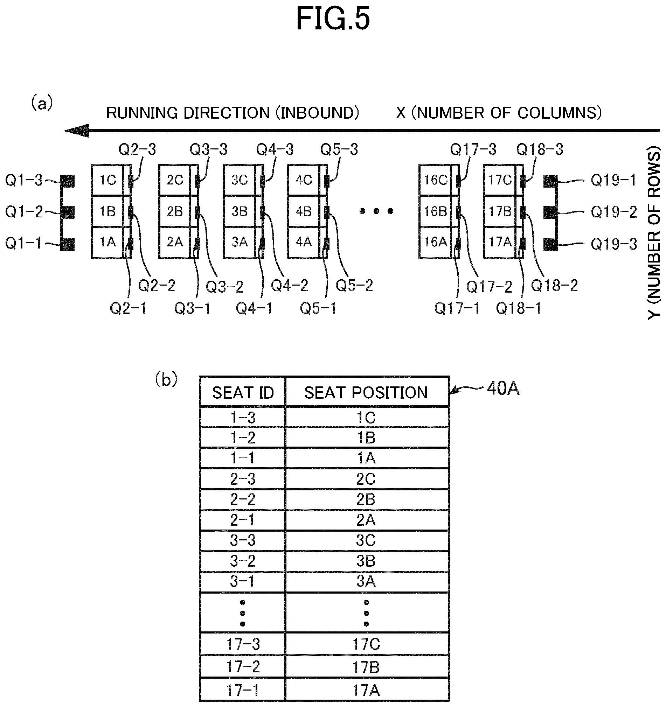

Fig. 5(a) illustrates examples of a seat position and an installation position of the position information providing medium in the case of running in the inbound direction. Fig. 5(a) illustrates an example in which the number of columns X of seats (the number of columns along a traveling direction of the train) is 17, and the number of rows Y (the number of rows along a width direction of the train) is 3.

In the example illustrated in Fig. 5(a), for example, on wall surfaces in front of the seats 1C, 1B, and 1A in the first column, a position information providing medium Q1-3 for a seat 1C, a position information providing medium Q1-2 for a seat 1B, and a position information providing medium Q1-1 for a seat 1A are arranged, respectively. Additionally, a position information providing medium Q2-3 for a seat 2C in the second column is arranged on a back face of the seat 1C, a position information providing medium Q2-2 for a seat 2B in the second column is arranged on a back face of the seat 1B, and a position information providing medium Q2-1 for a seat 2A in the second column is arranged on a back face of the seat 1A. Similarly, on a back face of each seat, a position information providing medium for a seat in a column behind a column in which each seat is positioned is arranged. As illustrated in Fig. 5(a), position information providing media Q18-1 to Q19-3 are also arranged on back faces of seats 17A to 17C in the 17th column and the wall surfaces behind the seats 17A to 17C. However, the position information providing media Q18-1 to Q19-3 are not used in the case of running in the inbound direction and are used only in the case of running in the outbound direction to be described later.

Each position information providing medium includes a uniform resource locator (URL) including information (installation position information) indicating an installation position of the position information providing medium and is configured to display a purchase procedure screen 70 to be described later on the user terminal 30 by reading the position information providing medium. The installation position information includes at least information on a train in which the position information providing medium is provided (train ID), position information of a seat on which the position information providing medium is provided (seat ID), and the like. The train ID is information for specifying the train provided with the position information providing medium and includes, for example, information such as a formation number and a car number. The seat ID is information for specifying a seat in which the position information providing medium is provided in the car, and includes, for example, information on the number of columns X of seats and the number of rows Y of seats in the case of running in the inbound direction. That is, for example, the position information providing medium Q1-3 for the seat 1C in the case of running in the inbound direction in the car 3 of the train to which a formation number "E7-01" is allocated stores installation position information "E7-01-3-1-3" ("E7-01" is the formation number, "3" is the car number, "1" is the number of columns X of seats, and "3" is the number of rows Y of seats.), and the position information providing medium Q2-1 for the seat 2A arranged on the back face of the seat 1A in the same car stores installation position information "E7-01-3-2-1".

### [Management Server]

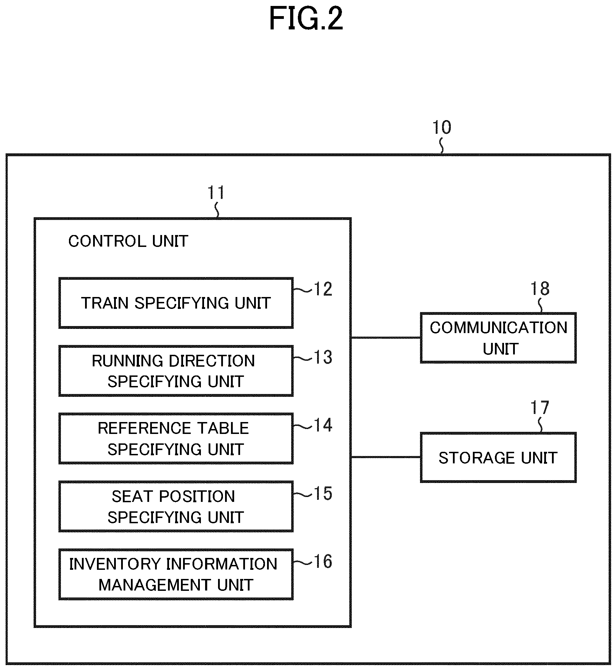

The management server 10 is a management server 10 that manages sales information and the like in a plurality of vehicles and is data-communicably connected to the attendant terminal 20 and the user terminal 30 via a communication line NW such as the Internet. Specifically, the management server 10 is, for example, a web server, and as illustrated in Fig. 2, includes a control unit 11 that controls the management server 10, a storage unit 17 that stores various data and various programs, and a communication unit 18 for communicating with the attendant terminal 20 and the user terminal 30 via the communication line NW.

The control unit 11 is configured to exert various functions to be described below by a central processing unit (CPU) executing various processing programs stored in the storage unit 17.

That is, the control unit 11 includes a train specifying unit 12 that relates to a function of specifying the seat position of the user, as illustrated in Fig. 2 and that specifies the train on which the user is riding on the basis of the train ID from the user terminal 30, a running direction specifying unit 13 that specifies a running direction of the train on which the user is riding on the basis of the information on the train with the attendant on duty from the attendant terminal 20, a reference table specifying unit 14 that specifies a data table to be referred to on the basis of the running direction specified by the running direction specifying unit 13, and a seat position specifying unit 15 that specifies the seat position of the user on the basis of the data table and the seat ID from the user terminal 30. Note that the information on the train with the attendant on duty is information transmitted from the attendant terminal 20 to the management server 10 when the attendant rides on the train and includes information for specifying the train on which the attendant is on duty such as information on a train formation and information on a running direction of the train.

Additionally, the control unit 11 includes an inventory information management unit 16 that relates to a function of update processing of the inventory information and that manages the inventory information on the basis of the inventory information and the settlement information from the attendant terminal 20. Note that the inventory information is inventory information managed by the management server 10 and includes at least inventory information registered in advance by the attendant terminal 20, real-time inventory information that varies in a sales process, and inventory information at the time of taking inventory (after sales end). The settlement information is information transmitted from the attendant terminal 20 to the management server 10 when a commodity purchase procedure is confirmed in the attendant terminal 20, and the settlement information includes at least a purchased commodity name and a commodity quantity purchased.

In addition to the above processing functions, the control unit 11 is configured to be capable of accepting various types of changes in registration information such as a change of registration information on the train, a change of registration information on the data tables, a change of registration information on the train ID, a change of registration information on the commodities in the train (new registration or change of a commodity, or the like).

The train specifying unit 12 is configured to specify the train on which the user is riding from among a plurality of trains registered in advance in the storage unit 17 on the basis of the train ID acquired from the user terminal 30.

The running direction specifying unit 13 is configured to specify a running direction of the train on which the user is riding on the basis of the information on the train with the attendant on duty acquired from the attendant terminal 20. That is, the running direction specifying unit 13 is configured to specify the attendant who is on duty on the same train as the user on the basis of the train specified by the train specifying unit 12 and the information on the train with the attendant on duty acquired from the attendant terminal 20 and configured to specify whether the running direction of the train on which the user is riding is "inbound" or "outbound". Note that in the present embodiment, the running direction specifying unit 13 specifies the running direction of the train on the basis of a running direction selected by the attendant via the attendant terminal 20, but the present invention is not limited thereto. For example, the running direction may be specified on the basis of other information (for example, a train name or the like) included in the information on the train with the attendant on duty acquired from the attendant terminal 20.

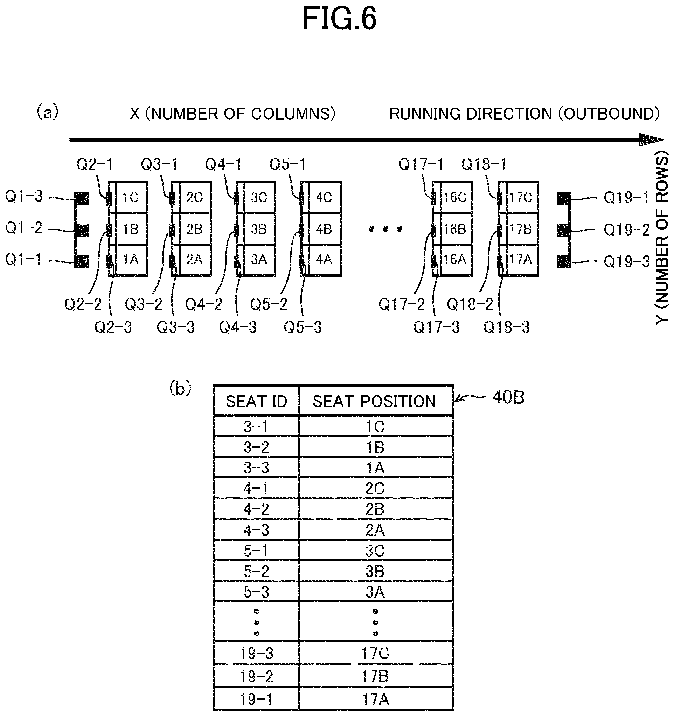

The reference table specifying unit 14 is configured to specify a data table to be referred to among data tables registered in advance in the storage unit 17 on the basis of the running direction specified by the running direction specifying unit 13. That is, in a case where the running direction specified by the running direction specifying unit 13 is "inbound", the reference table specifying unit 14 determines to refer to an inbound data table 40A (see Fig. 5(b)), and in a case where the running direction specified by the running direction specifying unit 13 is "outbound", the reference table specifying unit 14 determines to refer to an outbound data table 40B (see Fig. 6(b)).

As illustrated in an example in Fig. 5(b), a seat ID read from a position information providing medium arranged in association with each seat and each seat position (seat number) in a case where the train runs in the inbound direction are stored in association with each other in the inbound data table 40A. For example, in the example illustrated in Fig. 5(a), since the position information providing medium read by a user seated on the seat 1C in the first column is the position information providing medium Q1-3 arranged on the wall surface in front of the seat 1C in the first column, a seat ID "1-3" read from the position information providing medium Q1-3 and a position of a seat (seat number) "1C" provided in association with the position information providing medium Q1-3 are stored in association with each other in the inbound data table 40A. Note that in the case of running in the inbound direction, since the seats 17A to 17C are in the rearmost column, respective seat IDs (18-1 to 19-3) read from the position information providing media Q18-1 to Q18-3 arranged on the back faces of the seats 17A to 17C and the position information providing media Q19-1 to Q19-3 arranged on the wall surfaces behind the seats 17A to 17C in the running direction are not stored in the inbound data table 40A or are stored as error display items.

Meanwhile, as illustrated in an example in Fig. 6(b), a seat ID read from a position information providing medium arranged in association with each seat and each seat position (seat number) in a case where the train runs in the outbound direction are stored in association with each other in the outbound data table 40B.

Here, a correspondence relationship between a seat ID and each seat position (seat number) in a case where the train runs in the outbound direction is different from that in a case where the train runs in the inbound direction. That is, generally, in the bullet train, two or three seats adjacent to each other in a train width direction are connected to each other, the connected seats are grouped as one group, and a direction of the seats is reversed according to the running direction of the bullet train. Then, due to such a seat reversal, for example, a seat positioned on a window side in the case of running in the inbound direction is positioned on an aisle side in the case of running in the outbound direction. Conversely, a seat positioned on the aisle side in the case of running in the inbound direction is positioned on the window side in the case of running in the outbound direction. Additionally, a seat column positioned at the front column in the case of running in the inbound direction is positioned at the rear column in the case of running in the outbound direction, and conversely, a seat column positioned at the rear column in the case of running in the inbound direction is positioned at the front column in the case of running in the outbound direction. As a result, in a case where the train runs in the outbound direction, for example, a position information providing medium Q3-1 is positioned in front of the seat 1C, a position information providing medium Q3-2 is positioned in front of the seat 1B, and a position information providing medium Q3-3 is positioned in front of the seat 1A.

As described above, for example, in an example illustrated in Fig. 6(a), the position information providing medium read by the user seated on the seat 1C in the rearmost column in the running direction is the position information providing medium Q3-1 arranged on the back face of the seat 2C positioned in front of the seat 1C. Thus, in the outbound data table 40B, the seat ID "3-1" read from the position information providing medium Q3-1 and the position (seat number) "1C" of the seat provided in association with the position information providing medium Q3-1 are stored in association with each other. Note that in the case of running in the outbound direction, since the seats 1A to 1C are in the rearmost column, seat IDs (1-1 to 2-3) read from the position information providing media Q1-1 to Q1-3 arranged on the back faces of the seats 1A to 1C and the position information providing media Q2-1 to Q2-3 arranged on the wall surfaces behind the seats 1A to 1C in the running direction are not stored in the outbound data table 40B or are stored as error display items.

The seat position specifying unit 15 is configured to specify the position of the seat on which the user sits on the basis of a data table specified by the reference table specifying unit 14 and a seat ID from the user terminal 30. For example, in a case where the inbound data table 40A is selected by the reference table specifying unit 14 and the seat ID acquired from the user terminal 30 is "1-3", the seat position specifying unit 15 searches for a seat position corresponding to the seat ID "1-3" using the inbound data table 40A illustrated in Fig. 5(b), thereby specifying that the seat on which the user of the user terminal 30 sits is "1C".

The inventory information management unit 16 is configured to register the inventory information from the attendant terminal 20 in association with the train information in the storage unit 17. Additionally, the inventory information management unit 16 is configured to, on the basis of the inventory information, update the inventory information of the train where the commodity has been purchased by subtracting a purchase quantity of the commodity from the inventory information of the commodity stored in association with the train information.

The storage unit 17 stores an in-vehicle sales program for causing the control unit 11 to function as the train specifying unit 12, the running direction specifying unit 13, the reference table specifying unit 14, the seat position specifying unit 15, and the inventory information management unit 16. The in-vehicle sales program is a program for supporting sales of articles in a vehicle having a plurality of seats and is configured to cause the management server 10 to execute: train specifying processing executed by the train specifying unit 12 described above; running direction specifying processing executed by the running direction specifying unit 13 described above; data table specifying processing executed by the reference table specifying unit 14 described above; seat position specifying processing executed by the seat position specifying unit 15 described above; communication processing of transmitting information on a specified seat and information on a commodity desired to be purchased acquired from the user terminal 30 to the attendant terminal 20; and inventory information management processing executed by the inventory information management unit 16 described above.

Additionally, the storage unit 17 stores, for example, a train information data file including information in which a train name of the train or the like and the train ID are associated with each other, a data table data file in which the train information and the running direction are associated with each other, a seat position data file in which a data table and the seat ID are associated with each other, an inventory information data file including information on commodities in each train and information on inventory quantity of the commodities, and the like.

The communication unit 18 is configured to function as an interface for performing data communication with the attendant terminal 20 and the user terminal 30 and includes, for example, various communication devices such as a modem. Note that in the management server 10 according to the first embodiment, since the communication unit 18 can adopt various publicly known communication means, a detailed description thereof will be omitted.

### [Attendant Terminal]

The attendant terminal 20 is a terminal operated by an attendant who sells articles in a vehicle (in a bullet train) and is configured to be capable of exhibiting a train specifying function of specifying a train, a seat position confirming function of confirming a seat position of a user who wishes to purchase a commodity, a settlement function of making a settlement for a purchased commodity, and an inventory management function of managing inventory information of the commodity.

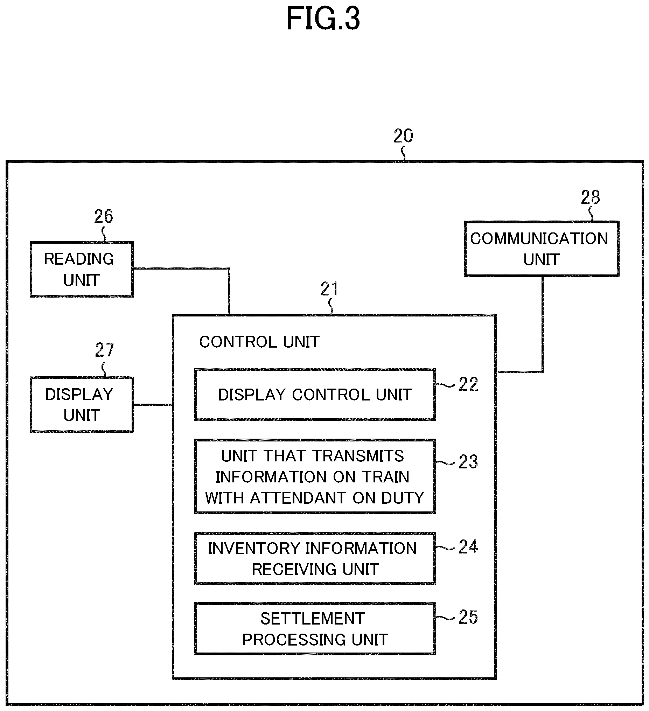

Specifically, the attendant terminal 20 includes, for example, a tablet terminal or the like having a touch panel (operation means) capable of inputting and displaying information, and as illustrated in Fig. 3, the attendant terminal 20 includes a control unit 21 that controls the attendant terminal 20, a reading unit 26 that reads a train information providing medium (not illustrated), a display unit 27 that displays various display screens, and a communication unit 28 for communicating with the management server 10 via the communication line NW. Note that since functions that a tablet terminal normally has can be used as the reading unit 26, the display unit 27, and the communication unit 28, description thereof will be omitted.

The train information providing medium includes, for example, a matrix-type two-dimensional code or the like and is provided, for example, in a backyard or the like of the train. The train information providing medium includes information on the train on which the train information providing medium is provided (information specifying a formation number of the train, and the like). The attendant terminal 20 is configured to acquire information on the train from the train information providing medium by the reading unit 26 reading the train information providing medium. Note that a position at which the train information providing medium is arranged is not limited to the backyard. For example, there may be adopted an aspect such as one in which the train information providing medium is printed on a printed matter (leaflet or the like). Additionally, the train information providing medium is not limited to the matrix-type two-dimensional code, and various media such as an IC chip capable of short-range communication can be adopted.

As illustrated in Fig. 3, the control unit 21 includes a display control unit 22 that cause the display unit 27 to display various display screens, a unit that transmits information on the train with the attendant on duty 23 that transmits, to the management server 10, the information on the train with the attendant on duty that is regarding the train on which the attendant is on duty, an inventory information receiving unit 24 that receives the inventory information from the management server 10, and a settlement processing unit 25 that performs settlement processing on the basis of purchase information received from the management server 10.

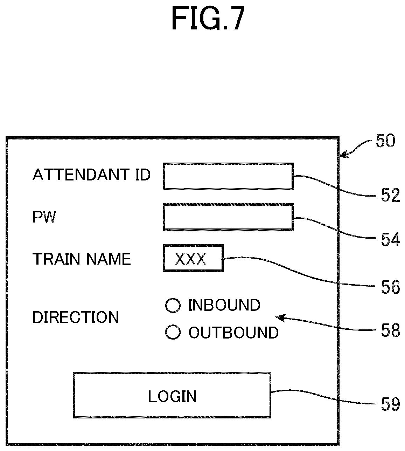

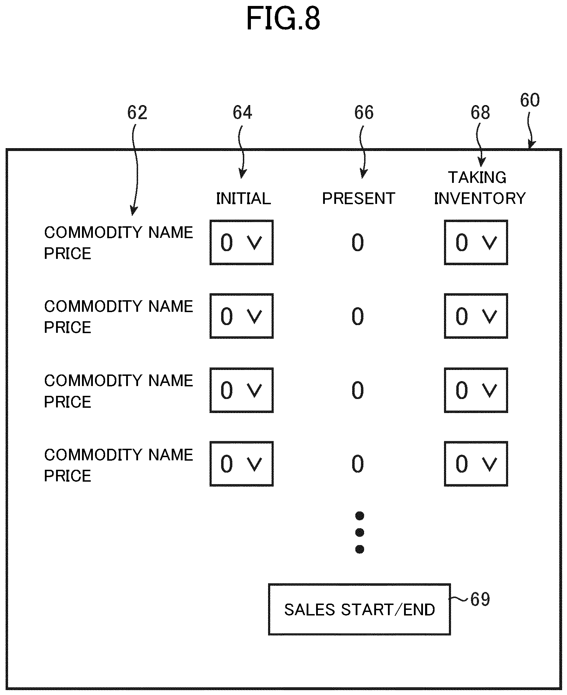

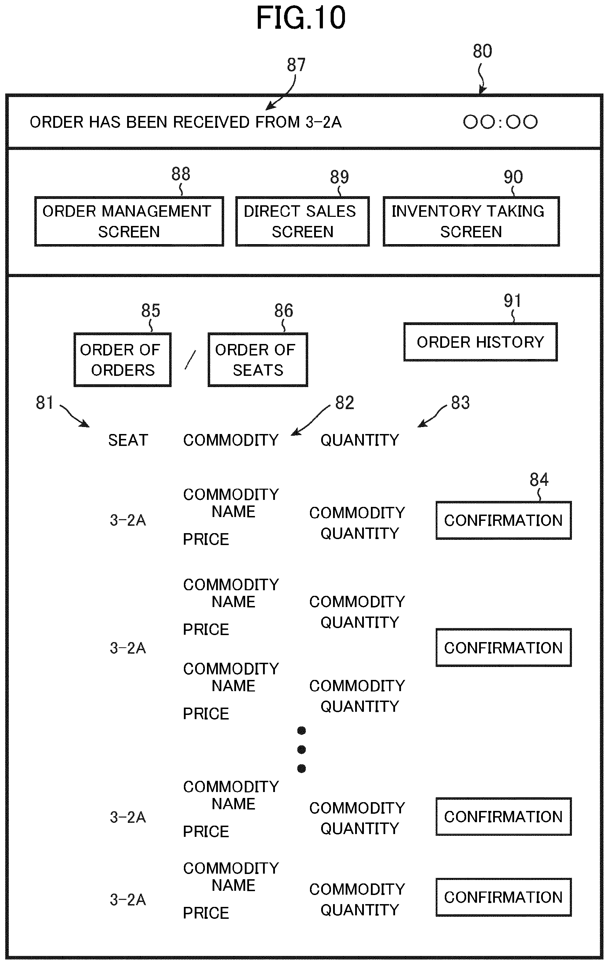

The display control unit 22 is configured to cause the display unit 27 to display, on the display screen of the attendant terminal 20, a series of operation screens such as a login screen 50 (see Fig. 7) for registering the train on which the attendant will be on duty and a running direction (inbound or outbound) of the train, and the like, an inventory information input screen 60 (see Fig. 8) for inputting inventory information such as the inventory quantity of a commodity, an order display screen 80 (see Fig. 10) on which various types of information such as a seat position of the user, a commodity desired to be purchased received from the management server 10 are displayed, and a settlement confirmation screen (not illustrated) for confirming settlement of the commodity. Note that the settlement confirmation screen is provided with, for example, a settlement completion button, an order cancellation button, a commodity addition button, and the like.

As illustrated in Fig. 7, the login screen 50 is provided with an ID input field 52 for inputting an attendant ID of the attendant who operates the attendant terminal 20, a password input field 54 for inputting a password (PW) of the attendant, a train name input field 56 for inputting information such as a train name of a train on which the attendant will ride, a running direction selection field 58 for selecting a running direction (inbound or outbound) of the train on which the attendant will be on duty, and a login button 59. In the present embodiment, the train name input field 56 is configured so that a train name can be selected by a pull-down method, but the present invention is not limited thereto and various input methods can be adopted.

As illustrated in Fig. 8, the inventory information input screen 60 is provided with a commodity information display field 62 in which information (for example, a commodity name, a commodity image, a price, and the like) of a commodity to be sold in the vehicle is displayed, an initial inventory quantity input field 64 for inputting an initial inventory quantity of the commodity, a current inventory quantity display field 66 in which a current inventory quantity of the commodity that varies in real time is displayed, a field for inputting an inventory quantity at the time of taking inventory 68 for inputting an inventory quantity at the time of taking inventory of the commodity (at the time of end of sales), and a sales start/end button 69 for starting real-time inventory management by the sales start/end button 69 being pressed after the initial inventory quantity is input and ending inventory management by the sales start/end button 69 being pressed after the inventory quantity at the time of taking inventory is input. The commodity information display field 62, the initial inventory quantity input field 64, the current inventory quantity display field 66, and the field for inputting an inventory quantity at the time of taking inventory 68 are provided for each commodity. When riding on the train, the attendant inputs an initial inventory quantity in the initial inventory quantity input field 64, and when taking inventory (at the time of end of sales), the attendant inputs an inventory quantity in a wagon in the field for inputting an inventory quantity at the time of taking inventory 68.

The order display screen 80 is configured so that statuses of orders for commodities placed by a user is displayed in a list. As illustrated in Fig. 10, a seat display field 81 in which a seat on which a user who has ordered commodities sits is displayed, a commodity information display field 82 in which information on the ordered commodity (for example, a commodity name, a commodity image, a price, and the like) is displayed, a quantity display field 83 in which a quantity of the ordered commodity is displayed, and a confirmation button 84 for changing from an unsold state to a sales completion state are arranged for each ordered commodity.

Additionally, as illustrated in Fig. 10, the order display screen 80 is provided with a sorting button for changing the arrangement order of the statuses of orders. In the first embodiment, an ordering order sorting button 85 for sorting a list of orders in order of orders and a seating order sorting button 86 for sorting the list of orders in order of seats are provided, but the present invention is not limited thereto and various sorting buttons can be provided. Additionally, as the sorting in order of seats, for example, various methods such as a method of sorting in order of seats in the entire train without distinguishing cars, a method of sorting in order of seats in units of cars, and the like can be adopted. Additionally, the sorting may be performed in absolute order of seats (order of seats with the frontmost column or the rearmost column in the running direction being as a starting point) or the sorting may be performed in order of being closer to or farther from a position of the attendant terminal 20. As described above, since the attendant terminal 20 can sort in order of orders, it is possible to intuitively grasp the user's waiting status, and since it is possible to sort in order of seats, it is possible to carry commodities efficiently.

Furthermore, as illustrated in Fig. 10, the order display screen 80 is provided with a pop-up display field 87 that displays the latest order status and the like in a pop-up form, and various buttons 88 to 91 for switching to other screens (for example, an order management screen, a direct sales screen, an inventory taking screen, an order history screen, and the like).

Note that in the present embodiment, the login screen 50, the inventory information input screen 60, and the order display screen 80 are screens displayed by an application installed in the attendant terminal 20, but the login screen 50, the inventory information input screen 60, and the order display screen 80 are not limited thereto and may be screens provided by the management server 10 that is a web server.

The unit that transmits information on the train with the attendant on duty 23 is configured to transmit, to the management server 10 via the communication unit 28, the information acquired from the train information providing medium (such as information for specifying the formation number of the train) and the information on the train name of the train, the running direction of the train, and the like input by the attendant on the login screen 50 as the information on the train with the attendant on duty. As a result, in the management server 10, the train on which the attendant is on duty, the formation number of the train, and the running direction of the train are registered in the storage unit 17.

The inventory information receiving unit 24 is configured to receive the initial inventory quantity input by the attendant on the inventory information input screen 60 and transmit the initial inventory quantity to the management server 10 via the communication unit 28. As a result, in the management server 10, the initial inventory quantity of the commodity to be sold in the train on which the attendant is riding is registered in the storage unit 17. Additionally, the inventory information receiving unit 24 is configured to receive the inventory quantity at the time of taking inventory (at the time of end of sales) input by the attendant on the inventory information input screen 60 and transmit the inventory quantity at the time of taking inventory to the management server 10 via the communication unit 28. As a result, in the management server 10, the inventory quantity of the commodity in the train that the attendant has ridden is registered in the storage unit 17.

The settlement processing unit 25 is configured to execute settlement processing (purchase processing) of the commodity via the settlement confirmation screen (not illustrated) and transmit the settlement information (such as a name and quantity of the sold commodity) to the management server 10 via the communication unit 28. As a result, in the management server 10, the inventory quantity of the commodity currently sold in the train on which the attendant is riding can be updated in real time, for example, by subtracting a quantity sold of the commodity from the inventory quantity of the commodity registered in the storage unit 17, and the updated inventory quantity of the commodity can be checked in real time on the inventory information input screen 60.

### [User Terminal]

The user terminal 30 is a portable terminal such as a smartphone (tablet terminal) possessed by each user and is schematically configured to execute display of a purchased commodity, confirmation of a purchase procedure, transmission of commodity purchase data including commodity information (a commodity code, a purchase quantity, and the like) to the management server 10, and the like via a transaction screen displayed on a display screen of the user terminal 30.

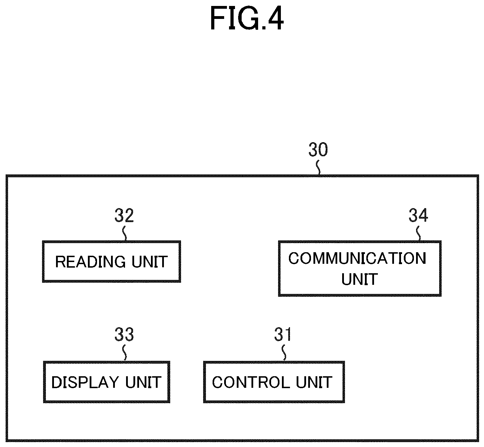

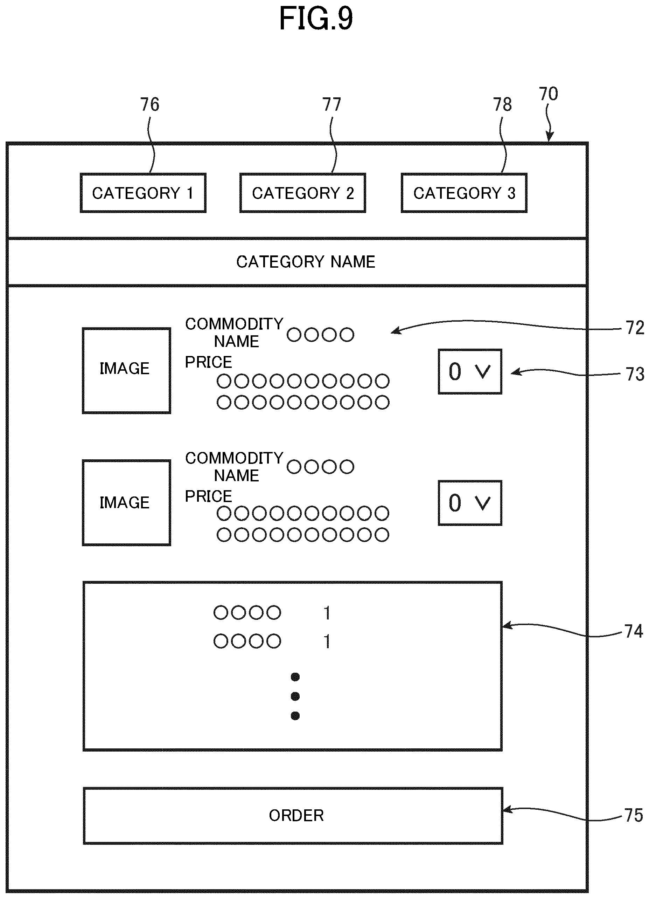

Specifically, as illustrated in Fig. 4, the user terminal 30 includes a control unit 31 that controls the user terminal 30, a reading unit 32 capable of reading the above-described position information providing medium arranged in the train, a display unit 33 that displays a purchase procedure screen 70 (see Fig. 9) regarding a purchase procedure or the like, and a communication unit 34 for communicating with the management server 10 via the communication line NW. Note that since functions that a portable terminal such as a smartphone normally has can be used as the reading unit 32, the display unit 33, and the communication unit 34, detailed description thereof will be omitted.

The reading unit 32 is configured to read the installation position information (train ID and seat ID) stored in the position information providing medium (matrix-type two-dimensional code or the like), for example, by capturing an image of the position information providing medium with a camera or the like.

The display unit 33 is configured to display the purchase procedure screen 70 on the display screen of the user terminal 30 after the reading unit 32 reads the position information providing medium. As illustrated in Fig. 9, the purchase procedure screen 70 is provided with a commodity information display field 72 in which a thumbnail image of a commodity, a commodity name, and a price are displayed, a quantity input button 73 for inputting a purchase quantity of a purchased commodity, a list display field 74 for displaying a list of purchased commodities, and an order confirmation button 75 for confirming an order. Additionally, the purchase procedure screen 70 is provided with a plurality of (three in the illustrated example) category selection buttons 76 to 78 for selecting a commodity category and is configured so that when any of the category selection buttons 76 to 78 is selected, only information on a commodity corresponding to the category is displayed or scrolling or the like is automatically performed to a position at which a commodity corresponding to the category is posted. Note that in the first embodiment, the purchase procedure screen 70 is provided by the management server 10 that is a web server, but the purchase procedure screen 70 is not limited thereto and may be a screen displayed by an application installed in the user terminal 30. In this case, a screen of the application can be displayed even in a case where a communication environment such as in a tunnel is poor.

The control unit 31 is configured to transmit the installation position information (train ID and seat ID) read by the reading unit 32 from the position information providing medium and information on the commodity desired to be purchased input via the purchase procedure screen 70 to the management server 10 via the communication unit 34.

### [In-vehicle Sales Method]

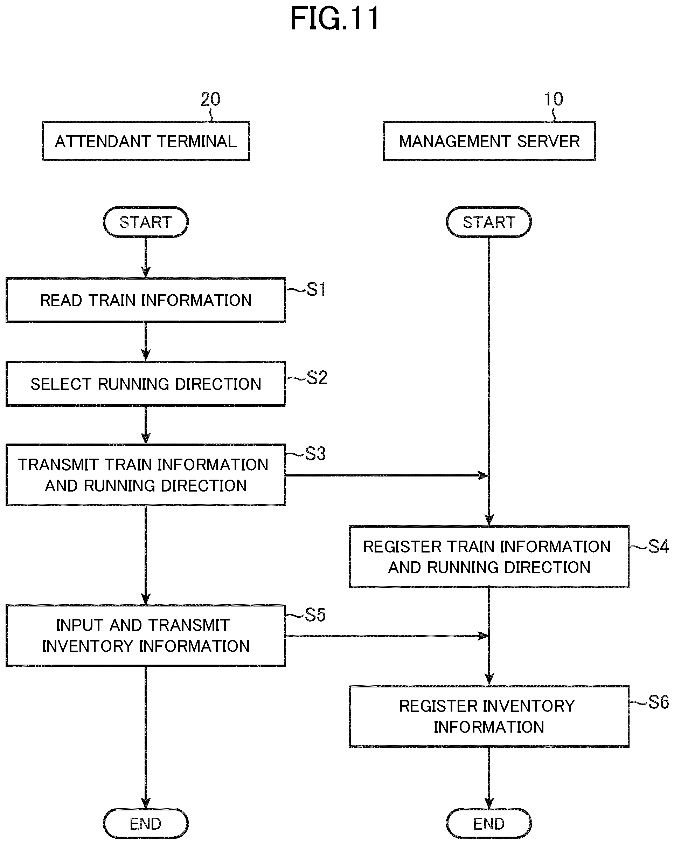

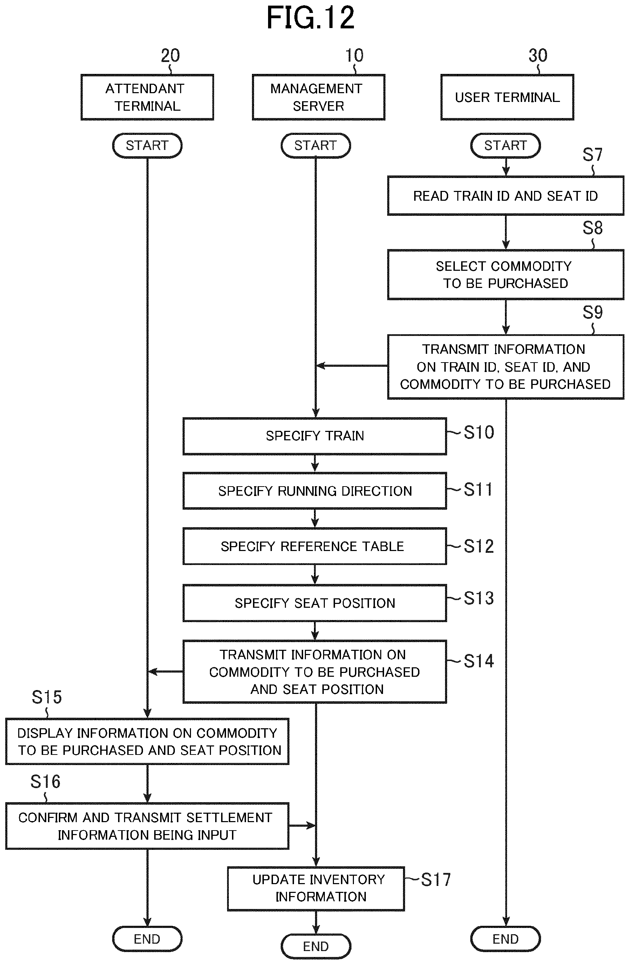

Next, an in-vehicle sales method using the in-vehicle sales system 1 according to the first embodiment will be described with reference to Figs. 7 to 12. The in-vehicle sales method according to the first embodiment schematically includes a preliminary preparation step (see Fig. 11) executed before the attendant conducts in-vehicle sales, and a purchase procedure and settlement step (see Fig. 12) executed when the user purchases a commodity.

### [Preliminary Preparation Step]

First, the preliminary preparation step executed when the attendant rides the train will be described with reference to Fig. 11. When riding the train, the attendant reads the train information providing medium (matrix-type two-dimensional code or the like) provided in the backyard of the train or the like by the reading unit 26 of the attendant terminal 20 (S1). As a result, information or the like for specifying a formation number of the train on which the attendant is on duty is acquired. Additionally, the login screen 50 described above is displayed on the display unit 27 of the attendant terminal 20.

The attendant inputs his/her attendant ID and password via the login screen 50 of the attendant terminal 20, selects a running direction (inbound or outbound) of the train on which he/she will ride (S2), and presses the login button 59. When the attendant presses the login button 59, the attendant terminal 20 executes authentication processing of the attendant ID and the password, and in a case where the authentication is approved, the attendant terminal 20 transmits information on the train with the attendant on duty (information for specifying a formation number of the train on which the attendant is on duty, information on the train name and the running direction of the train input via the login screen 50, and the like) to the management server 10 (S3). Meanwhile, in a case where the authentication is rejected, an error or the like is displayed on the display unit 27 of the attendant terminal 20.

When receiving the information on the train with the attendant on duty from the attendant terminal 20, the management server 10 registers information indicating that the attendant is riding on the train specified by the information on the train with the attendant on duty in the storage unit 17, and registers the running direction of the train in the storage unit 17 (S4).

Additionally, the attendant inputs an initial inventory quantity or the like of a commodity to be transacted via the inventory information input screen 60 of the attendant terminal 20, and presses the sales start/end button 69. When the attendant presses the sales start/end button 69, the attendant terminal 20 transmits inventory information (initial inventory quantity of a commodity or the like) to the management server 10 (S5). When receiving the inventory information (initial inventory quantity of the commodity or the like) from the attendant terminal 20, the management server 10 registers the inventory information in the storage unit 17 in association with the train information (S6), and ends processing regarding the preliminary preparation.

### [Purchase Procedure and Settlement Step]

Next, the purchase procedure and settlement step executed when the user purchases a commodity in the in-vehicle sales will be described with reference to Fig. 12. When purchasing a commodity in the in-vehicle sales, the user uses a reading function (reading unit 32) of the user terminal 30 possessed by the user to capture an image of the position information providing medium (matrix-type two-dimensional code or the like) arranged in association with the seat on which the user sits. As a result, the user terminal 30 reads the installation position information of the position information providing medium, that is, the information on the train on which the user is riding (train ID) and the position information of the installed seat (seat ID) from the position information providing medium (installation position information acquiring step: S7).

Additionally, after reading the position information providing medium, the user terminal 30 displays the purchase procedure screen 70 on the display unit 33, and receives information input (selection) such as selection of a commodity desired to be purchased by the user and a purchase quantity of the commodity desired to be purchased via the purchase procedure screen 70 (S8) .

Thereafter, when the order confirmation button 75 on the purchase procedure screen 70 is pressed, the user terminal 30 confirms a purchase procedure operation by the user, and transmits the installation position information (train ID and seat ID) read from the position information providing medium and the information on the commodity desired to be purchased (commodity name, purchase quantity, and the like) input via the purchase procedure screen 70 to the management server 10 (S9).

When receiving the installation position information (train ID and seat ID) and the information on the commodity desired to be purchased from the user terminal 30, the management server 10 first specifies the train on which the user is riding on the basis of the train ID acquired from the user terminal 30 (S10) and specifies the running direction of the train (S11). Note that the specification of the running direction of the train is performed on the basis of the information on the train with the attendant on duty (in particular, information on the running direction of the train) registered by the attendant terminal 20 in the preliminary preparation step described above.

Next, the management server 10 specifies a data table to be referred to on the basis of the train ID acquired from the user terminal 30 and the specified running direction (S12) and specifies the seat on which the user sits on the basis of the specified data table and the seat ID acquired from the user terminal 30 (seat position specifying step: S13). When specifying the seat on which the user sits, the management server 10 transmits information on the seat on which the user sits (seat position) and information on the commodity that the user wishes to purchase (information on the commodity desired to be purchased) to the attendant terminal 20 of the attendant who is on duty on the same train as the user (S14).

When receiving the information on the commodity desired to be purchased and the specified seat position from the management server 10, the attendant terminal 20 notifies of (displays) the information on the commodity desired to be purchased and the seat position received from the management server 10 on the order display screen 80 as illustrated in Fig. 10 (notification step: S15). Then, the attendant conducts in-vehicle sales while viewing the order display screen 80. As a result, in-vehicle sales work by the attendant can be supported.

Then, the attendant performs a settlement confirmation operation via the settlement confirmation screen on the attendant terminal 20 at a stage in which the sales of the commodity to the user is completed. When the settlement confirmation operation is performed, the attendant terminal 20 transmits the settlement information to the management server 10 (S16).

When receiving the settlement information from the attendant terminal 20, the management server 10 subtracts a quantity sold of the commodity from the inventory quantity of the purchased commodity from the inventory information stored in the storage unit 17 on the basis of the settlement information, thereby updating the inventory information of the train in which the commodity has been purchased (S17). Additionally, when acquiring the inventory quantity at the time of taking inventory (at the time of end of sales) from the attendant terminal 20, the management server 10 registers the inventory quantity in the storage unit 17 as the final inventory quantity. Through the above steps, the management server 10 ends processing regarding the purchase procedure and the settlement.

As described above, the in-vehicle sales system 1 according to the first embodiment includes: the position information providing medium that is arranged in association with each seat and provides installation position information on the seat; the user terminal 30 configured to be capable of acquiring the installation position information from the position information providing medium and configured to be capable of transmitting the acquired installation position information and information on a commodity desired to be purchased; the management server 10 configured to be capable of specifying the associated seat on the basis of the installation position information acquired from the user terminal 30 and to be capable of transmitting information on the specified seat and the information on the commodity desired to be purchased that is acquired from the user terminal 30; and the attendant terminal 20 configured to be capable of notifying of (displaying) the information on the seat and the information on the commodity desired to be purchased that are acquired from the management server 10.

According to such an in-vehicle sales system 1, with simple equipment and by a simple operation of arranging the position information providing medium in association with each seat and reading the position information providing medium with the user terminal 30, it is possible to specify the seat on which the user sits and it is possible to notify the attendant of the information on the commodity that the user desires to purchase together with the information on the seat on the user via the attendant terminal 20. Thus, in-vehicle sales can be made efficient.

Additionally, the in-vehicle sales system 1 according to the first embodiment is configured to specify the seat on which the user sits on the basis of the position information acquired from the user terminal 30 and the running direction of the vehicle. Thus, it is possible to accurately specify the seat on which the user sits even in a vehicle, for example, as in the bullet train in which a seat is reversed between when running in the inbound direction and when running in the outbound direction.

In particular, the in-vehicle sales system 1 according to the first embodiment is configured to, in specifying the seat in consideration of the running direction, specify the seat with reference to the inbound data table when the vehicle runs in the inbound direction and to specify the seat with reference to the outbound data table when the vehicle runs in the outbound direction. According to such a configuration, although it takes time and effort to prepare both the inbound data table and the outbound data table, it is possible to cope with a seat reversal only by selecting a data table, and thus, it is possible to reduce processing of specifying the seat (calculation processing or the like in the CPU).

Although preferred embodiments of the present invention have been described above, the technical scope of the present invention is not limited to the scope described in the embodiments described above. Various modifications or improvements can be made to each of the above embodiments.

### [Second Embodiment]

For example, in the in-vehicle sales system 1 according to the first embodiment described above, it has been described that in specifying the seat in consideration of the running direction, two types of data tables of the inbound data table and the outbound data table are prepared, and a data table to be referred to is selected according to the running direction of the vehicle. However, the present invention is not limited thereto, and seat reversal processing may be executed on the basis of a running direction of a vehicle, whereby a seat may be specified in consideration of the running direction. Hereinafter, an embodiment in which such seat reversal processing is executed will be described as a second embodiment.

In an in-vehicle sales system according to the second embodiment, similarly to the in-vehicle sales system 1 according to the first embodiment, a management server 10 includes a control unit 11, a storage unit 17, and a communication unit 18, and the control unit 11 includes a train specifying unit 12, a running direction specifying unit 13, a seat position specifying unit 15, and an inventory information management unit 16. Note that in the in-vehicle sales system according to the second embodiment, the train specifying unit 12, the running direction specifying unit 13, the inventory information management unit 16, the storage unit 17, and the communication unit 18 are similar to those of the in-vehicle sales system 1 according to the first embodiment, and thus the description thereof will be omitted. Additionally, an attendant terminal 20 and a user terminal 30 are similar to those of the in-vehicle sales system 1 according to the first embodiment, and thus the description thereof will be omitted.

Unlike the in-vehicle sales system 1 according to the first embodiment, the management server 10 according to the second embodiment does not include a reference table specifying unit 14 described above, and an inbound data table 40B and an outbound data table 40B are not registered. Additionally, unlike the in-vehicle sales system 1 according to the first embodiment, the management server 10 according to the second embodiment is configured to be capable of executing seat reversal processing in the seat position specifying unit 15.

Specifically, in a case where a running direction specified by the running direction specifying unit 13 is "inbound", the seat position specifying unit 15 is configured to specify a position of a seat on which a user sits by using a seat ID from the user terminal 30 as it is without performing the seat reversal processing. That is, in the case of running in an inbound direction, as illustrated in Figs. 5(a) and 5(b), the number of columns X of seats (the number of columns along a traveling direction of the train) is the number of columns of seats as it is. Additionally, in a case where the number of rows Y is "1", this means that a seat type is "A seat", in a case where the number of rows Y is "2", this means that the seat type is "B seat", and in a case where the number of rows Y is "3", this means that the seat type is "C seat". Therefore, for example, in a case where the seat ID received from the user terminal 30 is "1-3", "seat 1C" can be specified. In this way, the position of the seat on which the user sits can be specified by using the seat ID from the user terminal 30 as it is.

In the case of running in the inbound direction, since seats 17A to 17C are in the rearmost column, the position information providing media Q18-1 to Q18-3 arranged on the back faces of the seats 17A to 17C and the position information providing media Q19-1 to Q19-3 arranged on wall surfaces behind the seats 17A to 17C in the running direction are not used. Therefore, the seat position specifying unit 15 extracts information on the number of columns X of seats from the seat ID received from the user terminal 30, and in a case where the number of columns X exceeds the maximum number of columns (17 columns in an example illustrated in Fig. 5(a)) of seats (in a case where the maximum number of columns < X), it is determined that the position information providing media Q18-1 to Q19-3 that should not be used have been read, and an error is displayed on the user terminal 30.

### [Seat Reversal Processing]

Meanwhile, in a case where the running direction specified by the running direction specifying unit 13 is "outbound", the seat position specifying unit 15 performs the seat reversal processing. The seat reversal processing includes column conversion processing of the number of columns X of seats (the number of columns along the traveling direction of the train) and row conversion processing of the number of rows Y of seats (the number of rows along the width direction of the train).

First, in the column conversion processing, information on the number of columns X of seats is extracted from the seat ID received from the user terminal 30, and 2 (the number of position information providing media that are not required to be used due to a seat reversal) is excluded from the number of columns X, and a number obtained here is set as the "number of columns X' at the time of running in the outbound direction". That is, in the case of running in the outbound direction, since the seats 1A to 1C are in the rearmost column as illustrated in Fig. 6(a), the position information providing media Q1-1 to Q1-3 arranged on the back faces of the seats 1A to 1C and the position information providing media Q2-1 to Q2-3 arranged on the wall surfaces behind the seats 1A to 1C in the running direction are not used. Therefore, a number obtained by excluding the number of columns for two unused columns from the number of columns X of the seat ID received from the user terminal 30 is the "number of columns X' at the time of running in the outbound direction" of seats in the case of running in the outbound direction.

Note that in a case where the number of columns X of seats extracted from the seat ID received from the user terminal 30 is 2 or less, the seat position specifying unit 15 determines that the position information providing media Q1-1 to Q2-3 that should not be used have been read, and an error is displayed on the user terminal 30.

Meanwhile, in the row conversion processing, information on the number of rows Y of seats is extracted from the seat ID received from the user terminal 30, and a conversion from the number of rows Y into a "seat type at the time of running in the outbound direction" is performed.

Specifically, in the row conversion processing, first, information as to whether the number of rows of seats connected in the width direction of the train is two or three is acquired from the storage unit 17.

Then, in a case where the number of rows of the connected seats is three (A seat to C seat), the reversal processing for reversing the A seat and the C seat is performed. That is, in the case of running in the inbound direction, as illustrated in Figs. 5(a) and 5(b), in a case where the number of rows Y is "1", this means that the seat type is "A seat", when the number of rows Y is "2", this means that the seat type is "B seat", and in a case where the number of rows Y is "3", this means that the seat type is "C seat". However, in a case where the seat is reversed due to the switching of the running direction, "A seat" and "C seat" are switched therebetween. Therefore, in the row conversion processing, there is executed processing in which in a case where the number of rows Y of seats extracted from the seat ID received from the user terminal 30 is "1", the seat type is converted into "C seat", in a case where the number of rows Y is "2", the seat type is left as it is as "B seat" similarly to the case of traveling in the inbound direction, and in a case where the number of rows Y is "3", the seat type is converted into "A seat". Meanwhile, in a case where the number of rows of connected seats is two (D seat and E seat), the reversal processing for reversing the D seat and the E seat is executed.

Then, by combining the "number of columns X' at the time of running in the outbound direction" obtained by the above column conversion processing and the "seat type at the time of running in the outbound direction" obtained by the above row conversion processing, the position of the seat (the seat on which the user sits) after the seat reversal processing can be specified. That is, for example, in a case where the seat ID received from the user terminal 30 is "3-1", "1" obtained by excluding "2" from the number of columns X "3" is set as the "number of columns X' at the time of running in the outbound direction", and the number of rows Y "1" is converted from "A seat" that is the original seat type to "C seat" (seat type at the time of running in the outbound direction) and then by combining "1" and "C seat", it is possible to derive that the seat on which the user sits is the "seat 1C".

According to the in-vehicle sales system according to the second embodiment described above, since the seat position in the case of running in the outbound direction is specified by calculation of numerical values, it is not necessary to prepare an enormous amount of data tables. Thus, it is possible to reduce the burden of setting work in advance.

### [Shift Processing]

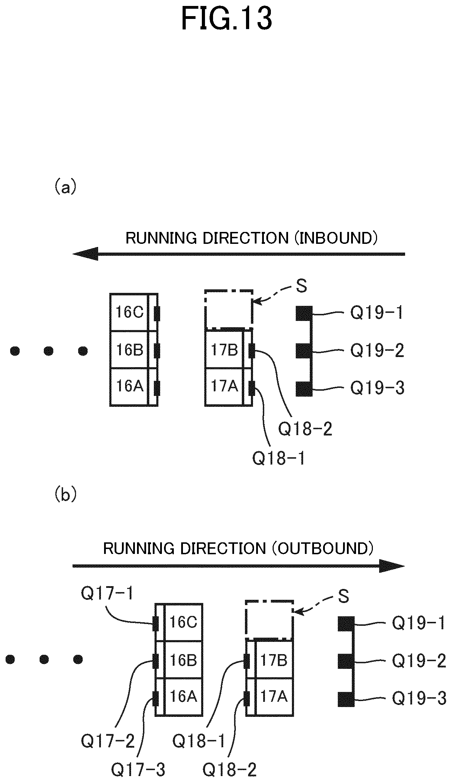

Note that in the row conversion processing described above, in a case where some seats do not exist due to a wheelchair space or the like, shift processing of moving seats closer together by the number of the seats that do not exist executed. That is, in a case where the number of rows of connected seats is three (A seat to C seat), conversion between "A seat" and "C seat" is supposed to be performed as described above. However, for example, as illustrated in Figs. 13(a) and 13(b), in a case where "C seat" does not exist due to a wheelchair space or the like, it is necessary to perform a conversion between "A seat" and "B seat" instead of a conversion between "A seat" and "C seat". Therefore, in the in-vehicle sales system according to the second embodiment, the conversion between "A seat" and "B seat" is possible by executing basic processing of the seat reversal processing described above and executing additional processing that is the shift processing only for a place where some seats do not exist due to a wheelchair space or the like. As a result, regarding the place where some seats do not exist due to a wheelchair space or the like, it is not necessary to perform different calculation because the number of rows Y is different only at the place, and it is possible to cope with the place by a simpler method. Note that the necessity of performing the shift processing and a method of the shift processing are the same even in a case where the number of rows of connected seats is two (D seat and E seat) and one of the seats does not exist due to a wheelchair space or the like.

Specifically, a place where no seat exists such as a wheelchair space is registered in advance in the storage unit 17, and after the seat position specifying unit 15 acquires information as to whether the number of rows of seats connected in the width direction of the train is two or three in the row conversion processing, the seat position specifying unit 15 determines whether there is a space where no seat exists in a column in front of a column to be subjected to conversion. For example, as illustrated in Fig. 13(b), in a case where the seat 17C in seat arrangement illustrated in Fig. 6(a) is removed to form a wheelchair space S, when the "number of columns X' at the time of running in the outbound direction" is "16", it is determined that the wheelchair space (space S where no seat exists) exists in a column (column 17) in front of a column (column 16) to be subjected to conversion. Then, in a case where it is determined that the space exists, the shift processing is executed.

In the shift processing, first, the row conversion processing described above is executed including the space where no seat exists (wheelchair space S). That is, in the example described above, since the seat 17C does not exist, the position information providing medium Q18-3 arranged on the backrest of the seat 17C does not originally exist, but on the assumption that the position information providing medium Q18-3 exists, a "seat 16C" is specified from a seat ID "18-1" received from the user terminal 30, a "seat 16B" is specified from a seat ID "18-2", and a "seat 16A" is specified from a seat ID "18-3" by the column conversion processing and row conversion processing described above. Thereafter, there is performed shift processing that deletes the "seat 16C", in front of which there is a space where no seat exists (wheelchair space S), allocates the "seat 16B" to the seat ID "18-1", and allocates the "seat 16A" to the seat ID "18-2". That is, in the shift processing, the seat of a user who has read the seat ID "18-1" is specified as the "seat 16B", and the seat of a user who has read the seat ID "18-2" is specified as the "seat 16A". As a result, even in a case where some seats do not exist due to a wheelchair space or the like, it is possible to specify a seat on which a user sits.

### [Other Alternative Examples]

In the embodiment described above, it has been described that the real-time inventory management is executed according to a sales situation in the attendant terminal 20, but the present invention is not limited thereto. The real-time inventory management does not need to be executed, and sales statuses (for example, on sale and sold out) may be switchable by an operation by the attendant via the attendant terminal 20.

In the embodiment described above, it has been described that the attendant selects the running direction of the train via the attendant terminal 20, but the present invention is not limited to this. For example, the running direction of the train may be specified on the basis of information such as information on planned operation, the running direction of the train may be specified on the basis of information such as a train name of the train (for example, the inbound direction or the outbound direction is determined on the basis of whether a number included in the train name is an odd number or an even number), and the running direction of the train may be selected by the user via the user terminal 30.

It is apparent from the description of the claims that the above modification examples are included in the scope of the present invention.

### Reference Signs List

- 1: In-vehicle sales system
- 10: Management server
- 11: Control unit
- 12: Train specifying unit
- 13: Running direction specifying unit
- 14: Reference table specifying unit
- 15: Seat position specifying unit
- 16: Inventory information management unit
- 17: Storage unit
- 18: Communication unit
- 20: Attendant terminal
- 21: Control unit
- 22: Display control unit
- 23: Running direction receiving unit
- 24: Inventory information receiving unit
- 25: Settlement processing unit
- 26: Reading unit
- 27: Display unit
- 28: Communication unit
- 30: User terminal
- 31: Control unit
- 32: Reading unit
- 33: Display unit
- 34: Communication unit
- 40A: Inbound data table
- 40B: Outbound data table
- NW: Communication line
- Q1-1 to Q19-3: Position information providing medium

## Claims

1. An in-vehicle sales system for supporting sales of articles in a vehicle having a plurality of seats, the in-vehicle sales system comprising:
a position information providing medium that is arranged in association with each seat and provides installation position information on the seat;
a user terminal configured to be capable of acquiring the installation position information from the position information providing medium and configured to be capable of transmitting the acquired installation position information and information on a commodity desired to be purchased;
a management server configured to be capable of specifying the associated seat on the basis of the installation position information acquired from the user terminal and to be capable of transmitting information on the specified seat and the information on the commodity desired to be purchased that is acquired from the user terminal; and
an attendant terminal configured to be capable of notifying of the information on the seat and the information on the commodity desired to be purchased that are acquired from the management server.

2. The in-vehicle sales system according to claim 1, wherein
the management server is configured to specify the seat on the basis of the installation position information acquired from the user terminal and a running direction of the vehicle.

3. The in-vehicle sales system according to claim 2, wherein
the management server includes an inbound data table in which the installation position information when the vehicle runs in an inbound direction is associated with the seat and an outbound data table in which the installation position information when the vehicle runs in an outbound direction is associated with the seat, and the management server is configured to specify the seat with reference to the inbound data table when the vehicle runs in the inbound direction and to specify the seat with reference to the outbound data table when the vehicle runs in the outbound direction.

4. The in-vehicle sales system according to claim 2, wherein
the management server is configured to be capable of executing seat reversal processing on the basis of the running direction of the vehicle.

5. A management server for supporting sales of articles in a vehicle having a plurality of seats, the management server comprising:
a seat position specifying unit that specifies a seat on which an operator of a user terminal sits on the basis of position information acquired from the user terminal; and
a communication unit that transmits, to an attendant terminal, information on the specified seat and information on a commodity desired to be purchased that is acquired from the user terminal.

6. The management server according to claim 5, wherein
the seat position specifying unit is configured to specify the seat on the basis of the position information acquired from the user terminal and a running direction of the vehicle.

7. An in-vehicle sales method for supporting sales of articles in a vehicle having a plurality of seats, the in-vehicle sales method comprising:
an installation position information acquiring step of acquiring, in a user terminal, installation position information of a position information providing medium arranged in association with each seat from the position information providing medium;
a seat position specifying step of specifying a seat on which an operator of the user terminal sits on the basis of the installation position information acquired in the user terminal; and
a notification step of notifying an attendant of information on the specified seat and information on a commodity desired to be purchased that is acquired from the user terminal via an attendant terminal.

8. The in-vehicle sales method according to claim 7, wherein
the seat position specifying step specifies the seat on the basis of the installation position information acquired from the user terminal and a running direction of the vehicle.

9. An in-vehicle sales program for supporting sales of articles in a vehicle having a plurality of seats, the in-vehicle sales program causing a management server to execute:
seat position specifying processing of specifying a seat on which an operator of a user terminal sits on the basis of position information acquired from the user terminal; and
communication processing of transmitting, to an attendant terminal, information on the specified seat and information on a commodity desired to be purchased that is acquired from the user terminal.

10. The in-vehicle sales program according to claim 9, wherein
the seat position specifying processing is processing of specifying the seat on the basis of the position information acquired from the user terminal and a running direction of the vehicle.
